# EUROPÄISCHE PATENTSCHRIFT

(11) **EP 4 035 987 B1**
(45) Veröffentlichungstag und Bekanntmachung des Hinweises auf die Patenterteilung: **11.10.2023**
(21) Anmeldenummer: 21154367.3
(22) Anmeldetag: 29.01.2021
(51) Int. Cl.: B63B 32/83, A63B 71/00, B63C 15/00, B65G 1/10

(54) **LAGERUNGSVORRICHTUNG ZUM LAGERN EINES SPORTRUDERBOOTS, ANORDNUNG MIT MEHREREN LAGERUNGSVORRICHTUNGEN UND VERFAHREN ZUM LAGERN EINES SPORTRUDERBOOTS**
STORAGE DEVICE FOR STORING A SPORTS ROWING BOAT, ARRANGEMENT COMPRISING SEVERAL STORAGE DEVICES AND METHOD FOR STORING A SPORTS ROWING BOAT
DISPOSITIF DE STOCKAGE PERMETTANT DE STOCKER UN BATEAU À RAME DE SPORT, AGENCEMENT POURVU DE PLUSIEURS DISPOSITIFS DE STOCKAGE, ET PROCÉDÉ DE STOCKAGE D'UN BATEAU À RAME DE SPORT

(43) Veröffentlichungstag der Anmeldung: 03.08.2022
(73) Patentinhaber: STEVILA UAB, 68461 Marijampole (LT)
(72) Erfinder: KÖTITZ, Stefan, 15746 Gross Köris (DE)
(74) Vertreter: Bittner, Thomas L.

(56) Entgegenhaltungen:
- CH-A5- 650 459
- NL-C2- 1 030 041
- US-B1- 6 253 932

## Beschreibung

Die Erfindung betrifft eine Lagerungsvorrichtung zum Lagern eines Sportruderboots, eine Anordnung mit mehreren Lagerungsvorrichtungen und ein Verfahren zum Lagern eines Sportruderboots.

### Hintergrund

Die Lagerung von Sportruderbooten findet konventionell in einem Bootshaus statt. Sportruderboote werden dabei grundsätzlich so gelagert, dass ihr Rumpf nach oben zeigt (rumpfaufwärts). Das Bootshaus umfasst dabei übereinander angeordnete Halterungen, auf die ausgehend von einem Mittelgang Sportruderboote seitlich gehoben werden können. Üblicherweise sind die Halterungen starre Streben, die frei in die Richtung des Mittelgangs ragen. Zur Lagerung der Boote wird die oberste Kante der Bordwand der Sportruderboote auf die Streben gesetzt. Eine Besonderheit bei der Lagerung von Sportruderbooten besteht darin, dass die Ausleger mit den Dollen von Sportruderbooten über die oberste Kante der Bordwand der Sportruderboote hinausragen. Dies hat zur Folge, dass Sportruderboote grundsätzlich nicht auf einer planaren Fläche lagerbar sind. Aus diesem Grund sind die Streben bei einer konventionellen Sportruderboothalterung auch frei angeordnet, derart, dass sie genau unter den Bereichen der Bordwand der Sportruderboote sitzen, die im Wesentlichen frei von Auslegern sind, damit das Boot weder mit den empfindlichen Dollen noch Auslegern aufliegt. In der Regel ist daher der Abstand der Streben einer Halterung individuell auf ein bestimmtes Boot eingestellt, welches dieser Halterung zugeordnet ist.

Üblicherweise liegt das Sportruderboot dabei lediglich mit der obersten Kante der Bordwand auf den Streben. Es kann jedoch auch der Luftkasten des Sportruderboots auf der Strebe aufliegen. In diesem Fall ist die Strebe in der Regel so gestaltet, dass der (sensible) Luftkasten beim Aufliegen keinen Schaden nimmt. Hierfür kann die Strebe z. B. gepolstert sein.

Der Mittelgang solcher Bootshäuser nimmt dabei mindestens ein Drittel des Lageraums ein. Um diesen Platz zu nutzen, können z. B. Wagen eingesetzt werden, die Boote aufnehmen und in den Mittelgang geschoben werden können. In diesem Fall müssen die Wagen jedoch üblicherweise zunächst aus dem Bootshaus herausgeschoben werden, bevor Boote in das Bootshaus hineingebracht oder aus dem Bootshaus herausgenommen werden können. Auch das Be- und Entladen der Wagen kann üblicherweise nur außerhalb des Bootshauses stattfinden. Wird der Platz des Mittelgangs also durch mit Booten beladenen Wagen genutzt, so ist zumindest vor dem Bootshaus ein hinreichend großer Bereich zum Rangieren der Wagen erforderlich. Außerdem kostet das Rangieren der Wagen Zeit.

Es besteht also ein Bedarf für eine Vorrichtungen bzw. Verfahren zur platzsparenden und einfachen Lagerung von Sportruderbooten.

Dokument DE 20 2004 016 124 U1 betrifft ein montierbares Einhangbügel-Gestell zur Lagerung von Booten, z. B. Optimisten, das einen auf zwei Schienen geführten Rollschlitten mit Einhangbügel aufweist. Das Gestell ist dadurch gekennzeichnet, dass sich der Einhangbügel zur Aufnahme des Boots über die auf den Schienen geführten Rollschlitten nur von der Vorderseite über die gesamte Länge des Gestells bis zur Hinterseite frei bewegen lässt.

Dokument KR 10-1256196 B1 offenbart einen Lagerstand für Schiffsmodelle. Dieses umfasst gemäß Dokument KR 10-1256196 B1 eine Lagergestell-Einheit, die durch eine Vielzahl von Einheitslagereinheiten gebildet ist, in denen Modellschiffe einzeln gelagert werden.

In dem Dokument CH 650 459 A5 ist eine Lagerung von Surf-Brettern und Zubehör, wie Mast, Segel, Gabelbaum, Schwert und Surfbekleidung, in verschließbaren, wettergeschützten Einzelfächern offenbart. Das Surf-Brett ist liegend, jedoch auf der Kante stehend, gelagert und in einer Rollschablone fixiert, welche das Einschieben und Herausziehen des Brettes erleichtert, indem das bis zu 26 kg schwere Surf-Brett immer nur an einem Ende, d. h. mit halbiertem Kraftaufwand, gehoben werden muss, und indem das Surfbrett auf der Rollschablone leicht in das Fach hinein- oder daraus herausgleitet.

### Zusammenfassung

Aufgabe der Erfindung ist es, eine Vorrichtung, eine Anordnung bzw. ein Verfahren anzugeben, mit denen Sportruderboote einfach, flexibel und platzsparend gelagert werden können.

Zur Lösung sind eine Lagerungsvorrichtung zum Lagern eines Sportruderboots, eine Anordnung mit mehreren Lagerungsvorrichtungen und ein Verfahren zum Lagern eines Sportruderboots nach den unabhängigen Ansprüchen 1, 8 und 16 geschaffen. Ausgestaltungen sind Gegenstand abhängiger Unteransprüche.

Nach einem Aspekt ist eine Lagerungsvorrichtung zum Lagern eines Sportruderboots geschaffen. Die Lagerungsvorrichtung weist eine erste und eine zweite Führungsschiene auf. Die Führungsschienen sind voneinander beabstandet und in einer horizontalen Ebene parallel zueinander angeordnet. Außerdem weist die Lagerungsvorrichtung eine erste Auflageeinrichtung auf, die zur lagernden Aufnahme eines ersten Bootabschnitts eines Sportruderboots mit einem ersten Schlitten gebildet ist. Der erste Schlitten ist mittels Rollen auf der ersten und der zweiten Führungsschiene rollend gelagert, derart, dass der erste Schlitten ohne und mit hierauf lagerndem Sportruderboot entlang der ersten und der zweiten Führungsschiene verlagerbar ist. Ferner weist der erste Schlitten äußere Abschnitte auf, die der ersten und der zweiten Führungsschiene zugeordnet sind und über einen Steg, auf welchem der erste Bootabschnitt nach dem Auflegen lagert, miteinander verbunden sind. Darüber hinaus weist die Lagerungsvorrichtung eine zweite Auflageeinrichtung, die zur lagernden Aufnahme eines zweiten Bootabschnitts des Sportruderboots, welcher von dem ersten Bootabschnitt verschieden ist, einer der folgenden Ausführungen entsprechend ausgeführt ist: ein zweiter Schlitten, der unabhängig von dem ersten Schlitten entlang der ersten und der zweiten Führungsschiene verlagerbar ist, und ein Träger, der in Bezug auf die erste und die zweite Führungsschiene ortsfest angeordnet ist und einen konvexen Auflageabschnitt aufweist.

Nach einem weiteren Aspekt ist eine Anordnung geschaffen, welche mehrere der oben genannten Lagerungsvorrichtungen aufweist. Gemäß dieser Anordnung sind die mehreren Lagerungsvorrichtungen übereinander angeordnet.

Nach einem weiteren Aspekt ist ein Verfahren zum Lagern eines Sportruderboots geschaffen. Dieses Verfahren weist folgende Schritte auf: Bereitstellen einer ersten und einer zweiten Führungsschiene, die voneinander beabstandet und in einer horizontalen Ebene parallel zueinander angeordnet sind; Bereitstellen einer ersten Auflageeinrichtung, die zur lagernden Aufnahme eines ersten Bootabschnitts eines Sportruderboots mit einem ersten Schlitten gebildet ist, wobei der erste Schlitten mittels Rollen auf der ersten und der zweiten Führungsschiene rollend gelagert ist, derart, dass der erste Schlitten ohne und mit hierauf lagerndem Sportruderboot entlang der ersten und der zweiten Führungsschiene verlagerbar ist, und äußere Abschnitte aufweist, die der ersten und der zweiten Führungsschiene zugeordnet sind und über einen Steg, auf welchem der erste Bootabschnitt nach dem Auflegen lagert, miteinander verbunden sind; Anordnen des ersten Schlittens in einer ersten Position, bei der der erste Schlitten in einem vorderen Bereich der ersten und der zweiten Führungsschiene angeordnet ist; Bereitstellen eines Sportruderboots; Auflegen eines ersten Abschnitts des Sportruderboots auf den Steg des ersten Schlittens; in Reaktion auf das Auflegen, Verschieben des Sportruderboots, derart, dass das Sportruderboot in seiner Längsrichtung mittels des ersten Schlittens entlang der ersten und der zweiten Führungsschiene in eine zweite Position bewegt wird, bei der der erste Schlitten in einem hinteren Bereich der ersten und der zweiten Führungsschiene angeordnet ist; Bereitstellen einer zweiten Auflageeinrichtung, die zur lagernden Aufnahme eines zweiten Bootabschnitts des Sportruderboots, welcher von dem ersten Bootabschnitt verschieden ist, einer der folgenden Ausführungen entsprechend ausgeführt ist: ein zweiter Schlitten, der unabhängig von dem ersten Schlitten entlang der ersten und der zweiten Führungsschiene vor und zurück bewegbar ist; und ein Träger, der in Bezug auf die erste und die zweite Führungsschiene ortsfest angeordnet ist und einen konvexen Auflageabschnitt aufweist; in Reaktion auf das Verschieben des Sportruderboots, Anordnen der zweiten Auflageeinrichtung in einem vorderen Bereich der ersten und der zweiten Führungsschiene; in Reaktion hierauf wird ein zweiter Abschnitt des Sportruderboots auf die zweite Auflageeinrichtung aufgelegt.

Unter Sportruderbooten sind Ruderboote zu verstehen, die speziell für den Renn- oder Trainingsbetrieb entwickelt wurden. Sportruderboote haben in der Regel einen Rumpf, der extrem schmal und vergleichsweise lang ist. Zusätzlich zum Rumpf umfassen Sportruderboote Ausleger mit Dollen, um Ruder (Skulls oder Riemen) aufzunehmen, und einen Rollsitz. Bei Sportruderbooten sitzt der Ruderer allgemein mit dem Rücken in Fahrtrichtung auf einem Rollsitz, der auf zwei Rollbahnen rollt. Die große Länge und ein halbrunder Querschnitt des Bootes reduzieren den Wasserwiderstand. Dies macht das Boot sowohl schnell als auch instabil. Es muss von den Ruderern ausbalanciert werden, damit es nicht kippt. Die Bordwand, der seitliche Teil der Außenwand des Boots, weist bei Sportruderbooten üblicherweise eine obere Kante auf. Diese Kante ist in der Regel der oberste Teil des Rumps von Sportruderbooten. Diese Kante ist üblicherweise vergleichsweise stabil. Insbesondere bei den Sportruderbooten Rennruderbooten ist diese Kante lediglich in einem mittleren Bereich des Boots angeordnet. Die Kante kann zumindest einen, bevorzugt alle, Auflagepunkte des Ruderboots auf einer Lagereinrichtung bilden.

Ferner umfassen Sportruderboote einen vorderen und einen hinteren Luftkasten. Der vordere bzw. der hintere Luftkasten kann einen vorderen bzw. hinteren Bereich des Sportruderboots bilden. In einer besonderen Ausgestaltung kann der vordere und / oder der hintere Luftkasten Auflagepunkte des Ruderboots auf einer Lagereinrichtung umfassen.

Es können mehr als zwei Schlitten vorgesehen sein. Die weiteren Schlitten können wie der erste oder der zweite Schlitten ausgestaltet sein. Zumindest ein Schlitten kann genau zwei äußere Abschnitte aufweisen. Die äußeren Abschnitte zumindest eines Schlittens können in einer Richtung parallel zu der ersten oder zweiten Führungsschiene wesentlich länger sein als in eine andere Richtung. Die Rollen zumindest eines Schlittens können an den äußeren Abschnitten angeordnet sein, insbesondere an äußeren Seiten der äußeren Abschnitte. Der Steg, der die beiden äußeren Abschnitte verbindet, kann ein Verbindungssteg sein. Der Steg kann vergleichsweise schmal sein, d. h. sein Querschnitt kann deutlich kleiner als seine Länge sein. Es kann vorgesehen sein, dass einer der Schlitten nicht herausnehmbar ist. Der Steg kann schlank bzw. stabförmig sein. Der Verlauf und / oder der Querschnitt (Form und Fläche) des Stegs kann variieren, insbesondere entlang seiner Länge.

Die Führungsschienen, insbesondere die erste und die zweite Führungsschiene, können insbesondere dafür eingerichtet sein, zumindest einen der Schlitten entlang einer horizontalen Richtung zu führen. Die Führungsschienen können einen vorderen und einen hinteren Bereich (vorderes und hinteres Ende) aufweisen. Der vordere Bereich kann der Bereich sein, über den Sportruderboote in die Lagerungsvorrichtung einführbar sind. Der erste Schlitten kann vor dem zweiten Schlitten angeordnet sein. D. h. der erste Schlitten kann näher zu dem vorderen Ende der Führungsschienen angeordnet sein als der zweite Schlitten. Der erste Schlitten kann ein vorderer Schlitten sein. Der zweite Schlitten kann vor dem ersten Schlitten angeordnet sein. D. h. der zweite Schlitten kann näher zu dem vorderen Ende der Führungsschienen angeordnet sein als der zweite Schlitten. Der zweite Schlitten kann ein vorderer Schlitten sein. Der nicht herausnehmbare Schlitten kann hinter dem herausnehmbaren Schlitten angeordnet sein. D. h. der nicht herausnehmbare Schlitten kann näher zu dem hinteren Ende der Führungsschienen angeordnet sein als der herausnehmbare Schlitten.

Der Träger, insbesondere der konvexe Abschnitt des Trägers, kann so geformt sein, dass er eine nach oben gerichtete Wölbung aufweist. Der Träger, insbesondere der konvexe Abschnitt des Trägers, kann einen mittleren Bereich aufweisen, der höher angeordnet ist als die Bereich des Trägers, die an den mittleren Bereich angrenzen. Der Träger kann stoffschlüssig und / oder formschlüssig an den Führungsschienen fixiert sein. Der Träger kann von den Führungsschienen lösbar sein.

Die Lagerungsvorrichtung kann derart eingerichtet sein, dass bei einer Lagerung eines Sportruderboots in der Lagerungsvorrichtung Folgendes erfüllt sein kann. Die Stege der Schlitten können die Kontaktpunkte des Sportruderboots mit der Lagerungsvorrichtung umfassen. Alternativ kann der Steg des ersten Schlittens und der Träger die Kontaktpunkte des Sportruderboots mit der Lagerungsvorrichtung umfassen. Insbesondere der Steg eines ersten der zwei Schlitten und der Steg eines zweiten der zwei Schlitten können die Kontaktpunkte des Sportruderboots mit der Lagerungsvorrichtung umfassen. Bootsseitig kann die oberste Kante der Bordwand und / oder zumindest einer der Luftkästen die Kontaktpunkte des Sportruderboots mit der Lagerungsvorrichtung umfassen. Es können vier, insbesondere ausschließlich vier, solcher Kontaktpunkte gebildet sein. Zwei der Kontaktpunkte können von einem ersten der zwei Schlitten umfasst sein und weitere zwei der Kontaktpunkte können von einem zweiten der zwei Schlitten umfasst sein. Bootsseitig können zwei der Kontaktpunkte von einem vorderen Bereich der obersten Kante der Bordwand des Sportruderboots umfasst sein und weitere zwei der Kontaktpunkte von einem hinteren Bereich der obersten Kante der Bordwand des Sportruderboots umfasst sein. Insbesondere die Ausleger mit den Dollen des Sportruderboots können keinen Kontaktpunkt des Sportruderboots mit der Lagerungsvorrichtung aufweisen. Auch der ganz vordere und der ganz hintere Bereich des Sportruderboots, die z. B. keine klare oberste Kante der Bordwand aufweisen, können keinen Kontaktpunkt des Sportruderboots mit der Lagerungsvorrichtung aufweisen. Der ganz vordere bzw. der ganz hintere Bereich des Sportruderboots kann den vordersten bzw. hintersten 1 m des Boots umfassen. Der ganz vordere bzw. der ganz hintere Bereich des Sportruderboots kann alternativ die vordersten bzw. hintersten 50 cm oder 1,5 m des Boots umfassen. Dadurch, dass zwei Schlitten unabhängig voneinander bewegbar sind, ist die Lagerungsvorrichtung individuell auf das zu lagernde Sportruderboot einstellbar.

Bei der Anordnung mit mehreren Lagerungsvorrichtungen können 5 Lagerungsvorrichtungen übereinander angeordnet sein. Alternativ können 3 bis 7 oder 2 bis 10 Lagerungsvorrichtungen übereinander angeordnet sein. Die Anordnung kann zwischen 1 m und 10 m hoch sein. Bevorzugt kann die Anordnung zwischen 2 m und 7 m hoch sein.

Ein abnehmbarer bzw. herausnehmbarer Schlitten kann insbesondere ein Schlitten sein, der händisch von den Führungsschienen (der ersten und der zweiten Führungsschiene) separiert werden kann. Bevorzugt kann der herausnehmbare Schlitten ohne weiteres Werkzeug, insbesondere unmittelbar händisch, von den Führungsschienen separiert werden. Der herausnehmbare Schlitten kann z. B. einfach von den Führungsschienen gehoben werden, d. h. er ist durch eine einfache vertikale Bewegung von den Führungsschienen separierbar. Alternativ oder zusätzlich kann der herausnehmbare Schlitten dadurch von den Führungsschienen separiert werden, indem er über ein Ende der Führungsschienen hinaus bewegt wird. Dies kann bevorzugt nur an einem der beiden Enden der Führungsschienen erfolgen, insbesondere an dem vorderen Ende.

Der zweite Schlitten kann mittels Rollen auf der ersten und der zweiten Führungsschiene rollend gelagert sein, derart, dass der zweite Schlitten ohne und mit hierauf lagerndem Sportruderboot entlang der ersten und der zweiten Führungsschiene verlagerbar ist, und äußere Abschnitte aufweist, die der ersten und der zweiten Führungsschiene zugeordnet sind und über einen Steg, auf welchem der zweite Bootabschnitt nach dem Auflegen lagert, miteinander verbunden sind.

Der Steg von zumindest einem Schlitten kann konvex sein und / oder zumindest ein Schlitten kann von den Führungsschienen abnehmbar sein. Der konvexe Steg kann so geformt sein, dass er eine nach oben gerichtete Wölbung aufweist, insbesondere in einem mittleren Abschnitt des Steges. Die hier ausgeführte Ausgestaltung des konvexen Stegs kann entsprechend auch für den Träger gelten.

Der Steg von zumindest einem Schlitten kann einen mittleren Bereich und äußere Bereiche aufweisen, wobei der mittlere Bereich höher angeordnet ist als die äußeren Bereiche. Der mittlere Bereich kann horizontal ausgerichtet sein. Der mittlere Bereich kann eingerichtet sein, die Kontaktpunkte des Sportruderboots mit der Lagerungsvorrichtung zu bilden. Die Bordwand des Boots kann z. B. nur auf den mittleren Bereichen der zwei Schlitten auflegbar sein. Ein vertikaler Abstand von der obersten Kante der Bordwand des Sportruderboots bis zum obersten Punkt der darüber hinausragenden Dollen des Sportruderboots kann kleiner sein als der horizontale Abstand des mittleren Bereichs zu den äußeren Bereichen. Der mittlere Bereich von einem der Schlitten kann höher angeordnet sein als der mittlere Bereich von einem anderen der Schlitten. Der mittlere Bereich des hinteren Schlittens kann höher angeordnet sein als der mittlere Bereich des vorderen Schlittens.

Zumindest ein Schlitten kann vier Rollen aufweisen, wobei zwei der vier Rollen die erste Führungsschiene kontaktieren und zwei weitere der vier Rollen die zweite Führungsschiene kontaktieren. Die vier Rollen können derart angeordnet sein, dass sie eine Rotation des Schlittens verhindern.

Zumindest eine Rolle der Rollen von zumindest einem Schlitten kann derart mit der ersten oder der zweiten Führungsschiene in Verbindung stehen, dass die Rolle in der horizontalen Ebene im Bereich der ersten oder der zweiten Führungsschiene ausschließlich entlang der ersten oder der zweiten Führungsschiene vor und zurück bewegbar ist. Bspw. kann eine konkav geformte Rolle in eine konvex geformte Führungsschiene greifen. Alternativ kann eine konvex geformte Rolle in eine konkav geformte Führungsschiene greifen. Eine Rolle des nicht herausnehmbaren Schlittens kann von einer der Führungsschienen umschlossen sein. Rollen des nicht herausnehmbaren Schlittens können eine der Führungsschienen umgreifen.

Die Länge der ersten und der zweiten Führungsschiene kann in einem Bereich zwischen 6 m und 20 m liegen und / oder der Abstand der ersten und der zweiten Führungsschiene kann in einem Bereich von 1,5 m bis 3 m liegen. Bevorzugt liegt die Länge der Führungsschienen bei 6 m bis 15 m oder 6 m bis 10 m. Der Abstand der ersten und der zweiten Führungsschiene kann bevorzugt in einem Bereich von 1,5 m bis 2 m liegen. Alternativ kann der Abstand zwischen der ersten und zweiten Führungsschiene bei 0,3 m bis 3 m liegen. Der Abstand der ersten und zweiten Führungsschiene kann weiter bevorzugt größer sein als der Dollenabstand des zu lagernden Sportruderboots. Die Führungsschienen können mehrere Schlitten (insbesondere mehr als zwei) lagernd aufnehmen, sodass mehrere Sportruderboote auf den Schlitten auf den zwei Führungsschienen hintereinander lagerbar sind. Die Länge der ersten und zweiten Führungsschiene kann in einem Bereich zwischen 6 m und 100 m liegen.

Die Dimension der Anordnung mit mehreren Lagerungsvorrichtungen kann in einer Längsrichtung parallel zu der ersten oder der zweiten Führungsschiene um ein Vielfaches größer sein als die Dimension der Anordnung in einer Richtung senkrecht zu der ersten oder der zweiten Führungsschiene. Die Dimension in Längsrichtung kann im Wesentlichen durch die Länge der Führungsschienen bestimmt sein. Das Verhältnis von Länge (Dimension in Längsrichtung) zu Breite (Dimension senkrecht zur Längsrichtung in horizontaler Ebene) kann größer als 3, bevorzug größer als 4, sein.

Die Anordnung mit mehreren Lagerungsvorrichtungen kann mehrere Sportruderboote umfassen. Ein erstes der mehreren Sportruderboote können von einer ersten der mehreren Lagerungsvorrichtungen lagernd aufgenommen sein. Ein zweites der mehreren Sportruderboote kann von einer zweiten der mehreren Lagerungsvorrichtungen lagernd aufgenommen sein. Das erste der mehreren Sportruderboote kann von dem zweiten der mehreren Sportruderboote verschieden sein. Das erste der mehreren Lagerungsvorrichtungen kann von dem zweiten der mehreren Lagerungsvorrichtungen verschieden sein. Die Sportruderboote können in der Anordnung übereinander angeordnet sein. Zusätzlich können zumindest zwei der mehreren Sportruderboote in einer der mehreren Lagerungsvorrichtungen hintereinander angeordnet sein.

Zumindest ein Sportruderboot kann derart von zumindest einer der mehreren Lagerungsvorrichtungen lagernd aufgenommen sein, dass auf dem Steg des ersten Schlittens der ersten Auflageeinrichtung der einen der mehreren Lagerungsvorrichtungen ein erster Abschnitt des Sportruderboots aufliegt und auf der zweiten Auflageeinrichtung der einen der mehreren Lagerungsvorrichtungen ein zweiter Abschnitt des Sportruderboots aufliegt. Die Punkte, an denen das Sportruderboot auf den Schlitten aufliegt, sind die Kontaktpunkte zwischen dem Sportruderboot und der Lagerungsvorrichtung bzw. Anordnung. Der erste und zweite Abschnitt des Sportruderboots können in einem mittleren Bereich des Sportruderboots angeordnet sein. Der mittlere Abschnitt des Sportruderboots kann der Abschnitt sein, der Personen (insbesondere Ruderer) aufnehmen kann. Der mittlere Abschnitt des Sportruderboots kann der Abschnitt sein, der eine klare obere Kante der Bordwand aufweist. Der mittlere Abschnitt des Sportruderboots kann der Abschnitt ohne Bug und Heck des Boots sein. Der mittlere Abschnitt des Sportruderboots kann der Abschnitt ohne den ganz vorderen und ganz hinteren Bereich des Boots sein, insbesondere der Abschnitt des Bootes der nicht die Luftkästen umfasst.

Die oberste Kante der Bordwand des Sportruderboots kann in einem mittleren Bereich des Sportruderboots den ersten und zweiten Abschnitt des Sportruderboots bilden. Das Sportruderboot kann lediglich mit der obersten Kante der Bordwand des Sportruderboots auf den Schlitten aufliegen. Alternativ kann das Sportruderboot mit einem der beiden Luftkästen auf einem der beiden Schlitten aufliegen. Weiter alternativ kann das Sportruderboot mit dem vorderen Luftkasten auf einem der beiden Schlitten aufliegen und mit dem hinteren Luftkasten entsprechend auf dem anderen der beiden Schlitten aufliegen. Bei einer Ausgestaltungsform kann das Sportruderboot mit einem der Luftkästen auf einem der beiden Schlitten aufliegen und außerdem mit der Bordwand auf dem anderen der beiden Schlitten aufliegen.

Die mehreren Lagerungsvorrichtungen können von einer Rahmenstruktur aufgenommen sein. Die Rahmenstruktur kann im Wesentlichen eine quaderförmige Struktur aufweisen. Die Rahmenstruktur kann Stützstreben aufweisen. Insbesondere können die Kanten der quaderförmigen Struktur durch Stützstreben gebildet sein. Die Stützstreben können über diagonal gespannte Verbindungselemente stabilisiert sein. Der Träger kann stoffschlüssig und / oder formschlüssig an der Rahmenstruktur fixiert sein. Der Träger kann von der Rahmenstruktur lösbar sein.

Die Rahmenstruktur kann auf Rädern stehen. Alternativ kann die Rahmenstruktur fest mit dem Boden verbunden sein. Die Rahmenstruktur kann z. B. auf vier Rädern stehen. Zumindest eines der Räder kann um eine vertikale Achse um 360° schwenkbar sein. Zumindest eines der Räder kann um eine vertikale Achse nicht schwenkbar sein. Die Rahmenstruktur kann derart auf Rädern stehen, sodass die Rahmenstruktur frei auf einer Fläche bewegbar ist. Zumindest eines der Räder kann einen Vollgummireifen (mit Weich- und / oder Hartgummi), einen Luftreifen, einen Kunststoffreifen oder einen Metallreifen aufweisen.

Die Rahmenstruktur kann verkleidet sein, derart, dass die in der Rahmenstruktur gelagerten Sportruderboote vor äußeren Einflüssen geschützt sind. Insbesondere kann die Rahmenstruktur mit einer Verkleidung verkleidet sein. Die Verkleidung kann Wasserdicht sein. Die Verkleidung kann, insbesondere die gelagerten Sportruderboote, vor Feuchtigkeit schützen. Die Verkleidung kann UV-beständig sein. Die Verkleidung kann für UV-Strahlung im Wesentlichen opak sein. Die Verkleidung kann, insbesondere die gelagerten Sportruderboote, vor UV-Strahlung schützen. Ferner kann die Verkleidung abschließbar sein. Außerdem kann die Verkleidung aus einem widerstandfähigen Material sein. Die Verkleidung kann, insbesondere die gelagerten Sportruderboote, vor Vandalismus schützen.

In Verbindung mit dem Verfahren zum Lagern eines Sportruderboots können die vorangehend im Zusammenhang mit der Lagerungsvorrichtung zur Lagerung von einem oder mehreren Sportruderbooten bzw. der Anordnung mit mehreren Lagerungsvorrichtungen beschriebene Ausgestaltungen entsprechend vorgesehen sein.

Auch können in Verbindung mit der Anordnung mit mehreren Lagerungsvorrichtungen die vorangehend im Zusammenhang mit der Lagerungsvorrichtung zur Lagerung von einem oder mehreren Sportruderbooten beschriebene Ausgestaltungen entsprechend vorgesehen sein.

Außerdem können in Verbindung mit der Lagerungsvorrichtung zur Lagerung von einem oder mehreren Sportruderbooten die vorangehend im Zusammenhang mit der Anordnung mit mehreren Lagerungsvorrichtungen beschriebene Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer ersten Anordnung zur Lagerung von einem oder mehreren Sportruderbooten mit mehreren Lagerungsvorrichtungen in einer frontalen Ansicht (Ansicht von vorne);
- Fig. 2: eine schematische Darstellung einer zweiten Anordnung zur Lagerung von einem oder mehreren Sportruderbooten mit mehreren Lagerungsvorrichtungen in einer frontalen Ansicht (Ansicht von vorne);
- Fig. 3: eine schematische Darstellung einer Anordnung zur Lagerung von einem oder mehreren Sportruderbooten mit mehreren Lagerungsvorrichtungen in einer Längsansicht (Ansicht von einer Seite);
- Fig. 4: eine schematische grafische Darstellung, die die Verfahrensschritte zum Lagern eines Sportruderboots in einer Anordnung zur Lagerung von einem oder mehreren Sportruderbooten mit mehreren Lagerungsvorrichtungen illustriert.

Die nachfolgend beschriebenen Ausführungsbeispiele können zum Beispiel zum Lagern von Sportruderbooten genutzt werden.

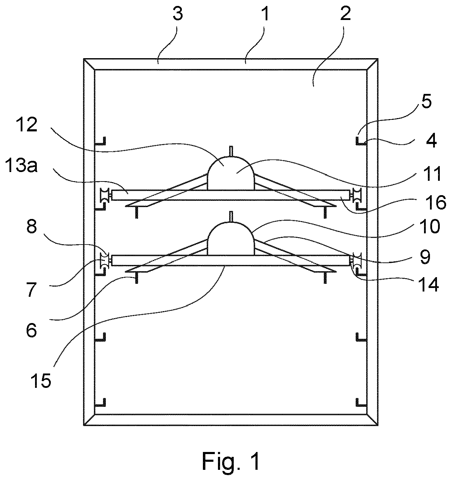

Fig. 1 zeigt schematisch eine Anordnung 1 zur Lagerung von einem oder mehreren Sportruderbooten 11 mit mehreren Lagerungsvorrichtungen 15 in einer ersten Ausführungsform. Die Anordnung ist in der Fig. 1 von vorne zu sehen. Daher stellt Fig. 1 die Vorderseite 2 der Anordnung dar. In der dargestellten Anordnung werden auf zwei Lagerungsvorrichtungen 15 zwei Sportruderboote 11 gelagert. Alternativ können in der dargestellten Anordnung 1 auch nur eins oder bis zu fünf Sportruderboote 11 gelagert sein. Die Sportruderboote 11 können übereinander gelagert sein. Das Sportruderboot 11 weist hier einen Rumpf 12, Ausleger 9 mit Dollen 6 und eine oberste Kante der Bordwand 10 auf. Das Sportruderboot 11 ist in dieser Ausführungsform rumpfaufwärts auf der obersten Kante der Bordwand 10 gelagert. Abschnitte der obersten Kante der Bordwand 10 können auf dem Steg 13a eines Schlittens 16 aufliegen. Der Schlitten 16 bildet eine erste Auflageeinrichtung, insbesondere eine erste Auflageeinrichtung für das Sportruderboot 11. Der Steg 13a des Schlittens 16 kann gerade ausgeführt sein. Der Steg 13a kann einen mittleren Teil des Schlittens 16 bilden. Der Steg 13a verbindet äußere Bereiche 14 des Schlittens 16. Der Steg 13a kann so gebildet sein, dass bei einer Ansicht von vorne der Steg 13a und zumindest einer der Ausleger 9 überlappen. Der Steg 13a kann unmittelbar an die äußeren Bereiche 14 des Schlittens 16 angrenzen. An den äußeren Bereichen 14 des Schlittens 16 können Rollen 7 angeordnet sein. Diese Rollen 7 können eine konkave Form 8 aufweisen und auf einer Führungsschiene 4 mit einer konvexen Form 5 aufliegen. Alternativ können die Rollen auch eine konvexe Form und die Führungsschiene 4 eine konkave Form aufweisen. Beide Ausführungsformen dienen der Führung der Rollen 7. Insbesondere kann dadurch der Freiheitsgrad der translatorischen Bewegung der Rollen 7 eingeschränkt werden. Es kann vorgesehen sein, dass die Rolle 7 in einer horizontalen Ebene in einem Bereich der Führungsschiene 4 nur entlang dieser Führungsschiene 4 bewegbar ist. Eine Einschränkung der translatorischen Bewegung der Rolle 7 kann gleichzeitig die translatorische Bewegung des diese Rolle 7 umfassenden Schlittens 16 einschränken, insbesondere in gleicher Weise. In der beispielhaft gezeigten Ausführungsform sind mehrere Lagerungsvorrichtungen 15 in der Anordnung 1 von einer optionalen Rahmenstruktur 3 aufgenommen. Die Rahmenstruktur 3 kann hierbei eine Verkleidung und / oder Stützstreben aufweisen. Der Schlitten 16 kann hier der vordere Schlitten sein. Außerdem kann der Schlitten 16 hier der herausnehmbare Schlitten sein. Das Sportruderboot 11 kann insbesondere ein Skull- oder Riemenboot sein. Das Sportruderboot 11 kann ein Rennruderboot sein. Das Sportruderboot 11 kann bevorzugt ein Skiff / Einer (1x); ein Zweier: z. B. Doppelzweier (2x), Zweier ohne Steuermann (2-) oder Zweier mit Steuermann (2+), ein Vierer: z. B. Doppelvierer (4x), Vierer ohne Steuermann (4-), Vierer mit Steuermann (4+); oder ein Achter: z. B. Achter mit Steuermann (8+) sein. Jeweils zwei Schlitten 16 können genau einem Sportruderboot 11 zugeordnet sein. Insbesondere bei einem 8+ können auch drei Schlitten einem Sportruderboot 11 zugeordnet sein. Die zwei Schlitten 16 können sich zusammen mit dem darauf liegenden Sportruderboot 11 auf den zwei Führungsschienen 4 gemeinsam vor und zurück bewegen. Der Schlitten 16 kann von den Führungsschienen 4 (per Hand, d. h. händisch) gehoben werden. Der Schlitten 16 kann vorne aus der Anordnung 1 herausgeschoben werden und dadurch von den Führungsschienen 4 separiert werden. Die Anordnung 1 kann bevorzugt breiter sein als die Gesamtbreite (ca. 1,6 m) des Sportruderboots 11. Die Anordnung 1 kann bevorzugt länger sein als die Gesamtlänge (ca. 6 m bis 18 m) des Sportruderboots 11. Insbesondere kann die Anordnung 1 länger sein als die Gesamtlänge von zwei, drei oder vier Sportruderbooten 11. Die Anordnung 1 kann höher sein als die Gesamthöhe (ca. 0,4 m bis 0,7 m) von zwei Sportruderbooten 11. Bevorzugt kann die Anordnung 1 höher sein als die Gesamthöhe von drei bis sieben Sportruderbooten 11. Die Führungsschienen 4 können bspw. L-Profile aufweisen. Das Profil der Führungsschienen 4 kann einen Schienenkopf aufweisen. Die Rahmenstruktur 3 kann die Lagerungsvorrichtungen 15 der Anordnung 1 vollständig umgeben. Die Rahmenstruktur 3 kann einen rechteckigen Querschnitt aufweisen.

Die Anzahl der in der Fig. 1 dargestellten Bauteil (Boote 11, Führungsschienen 4, Schlitten 16, Rollen 7, Lagerungsvorrichtungen 15, etc.) ist exemplarisch und kann für verschiedene Einsatzzwecke angepasst werden.

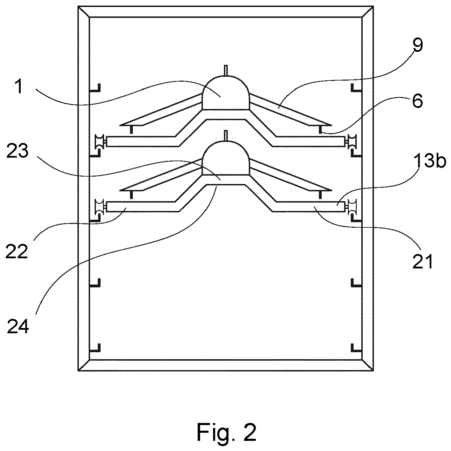

Fig. 2 zeigt, wie Fig. 1, ebenfalls schematisch eine Anordnung 1 zur Lagerung von einem oder mehreren Sportruderbooten 11 mit mehreren Lagerungsvorrichtungen 15. Die Anordnung 1 der Fig. 2 stellt jedoch eine alternative zweite Ausführungsform der Anordnung 1 dar. Der wesentliche Unterschied zu der in Fig. 1 gezeigten ersten Ausführungsform besteht darin, dass der Schlitten 16 anders konzipiert ist. Ansonsten gelten die oben genannten Ausführungen im Zusammenhang mit der in Fig. 1 gezeigten ersten Ausführungsform analog auch für die in Fig. 2 gezeigte zweite Ausführungsform der Anordnung 1.

Der Schlitten 16 aus Fig. 2 kann so gestaltet sein, dass dieser nicht von den Führungsschienen 4 abnehmbar ist. Der Schlitten 16 weist einen Steg 13b, einen mittleren Bereich 23, und äußere Bereiche 21, 22 auf. Der Steg 13b kann konvex sein. Der konvexe Steg 13b kann eine nach oben gerichtete Wölbung 24 aufweisen. Der mittlere Bereich 23 kann in einer horizontalen Ebene liegen. Der Steg 13b kann stabförmig sein. Der Verlauf und / oder der Querschnitt (Form und Fläche) des Stegs 13b kann variieren, insbesondere entlang seiner Länge. Der Übergang der äußeren Bereiche 21, 22 zum mittleren Bereich 23 kann stetig sein. Alternativ kann die Wölbung 24 trapezförmig sein. Die Länge des mittleren Bereichs kann kleiner als die Länge eines oder beider äußeren Bereiche 21, 22 sein. Die Anordnung 1 kann Schlitten 16 sowohl mit konvexen als auch mit nicht konvexen Stegen aufweisen. Insbesondere kann in einer der Lagerungsvorrichtungen 15 ein hinterer Schlitten 16 einen konvexen Steg aufweisen und ein vorderer Schlitten 16 keinen konvexen Steg aufweisen. Der mittlere Bereich 23 eines hinteren Schlittens 16 kann höher angeordnet sein als der mittlere Bereich 23 eines vorderen Schlittens 16. Der Steg 13b kann derart gestaltet sein, dass der Unterschied der Höhe des mittleren Bereichs 23 zur (geringsten) Höhe der äußeren Bereiche 21, 22 größer ist als der vertikale Abstand von der obersten Kante der Bordwand oder von einem der beiden Luftkästen des Sportruderboots 11 zum obersten Punkt der Dolle 6. Der Steg 13b zumindest eines der Schlitten 16 kann derart gebildet sein, dass in einer Frontalansicht die Ausleger 9 des auf dem Steg 13b lagernden Sportruderboots 11 und der Steg 13b keinen Überlappungsbereich aufweisen.

Die Unterschiede der Ausgestaltungen der Fig. 1 und 2 können beide dafür eingerichtet sein, dass das Sportruderboot 11 leicht in die Lagervorrichtung 15 eingebracht werden kann, um es darin zu lagern. Sowohl der herausnehmbare Schlitten 16 mit einem geraden Steg 13a (nicht konvex) als auch der Schlitten 16 mit einem konvexen Steg 13b sind derart konzipiert, dass bei einem Einbringen des Sportruderboots 11 in die Lagerungsvorrichtung 15 das Kollisionspotenzial von den Auslegern 9 des Sportruderboots 11 mit dem Schlitten 16 gering gehalten wird.

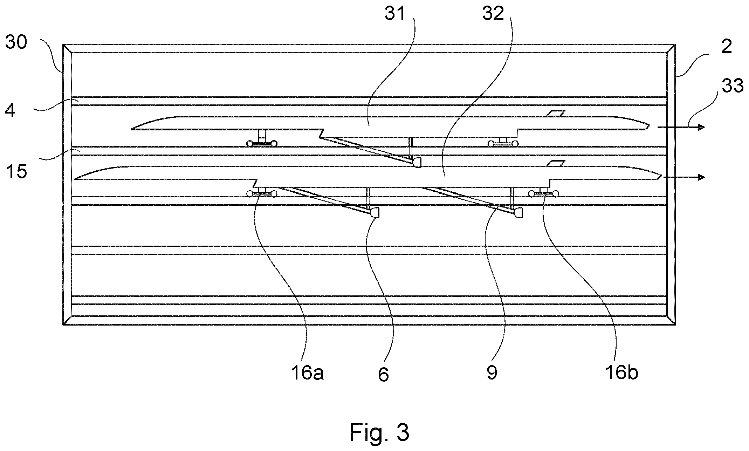

Fig. 3 zeigt eine schematische Darstellung einer Anordnung 1 zur Lagerung von einem oder mehreren Sportruderbooten 11 mit mehreren Lagerungsvorrichtungen 15 in einer Längsansicht. Die Anordnung 1 weist eine vordere Seite 2 und eine hintere Seite 30 auf. Über die vordere Seite 2 sind die Sportruderboote 11 in die Lagerungsvorrichtungen 15 einführbar. Außerdem sind die Sportruderboote 11 aus der Lagerungsvorrichtungen 15 über die vordere Seite 2 herausnehmbar (insbesondere in Richtung des dargestellten Pfeils 33). In Fig. 3 sind beispielhaft ein Einer 31 und ein Zweier 32 gelagert. Es können jedoch auch weitere Sportruderboote 11 und auch Sportruderboote 11 eines anderen Typs gelagert werden. Fig. 3 weist Schlitten 16 mit geraden Stegen 13a (nicht konvex) auf. Es kann jedoch auch zumindest ein Schlitten 16 vorgesehen sein, der einen konvexen Steg 13b aufweist. Die Schlitten 16 können zumindest zwei Rollen 7 aufweisen, die einer der Führungsschienen 4 zugeordnet ist. Der erste Schlitten 16a kann nicht herausnehmbar sein. Der zweite Schlitten 16b kann herausnehmbar sein.

Anstatt des zweiten Schlittens 16b kann ein Träger vorgesehen sein (nicht dargestellt), der nicht auf der ersten und der zweiten Führungsschiene 4 vor und zurück bewegbar ist, d. h. ortsfest ist, und einen konvexen Abschnitt aufweist.

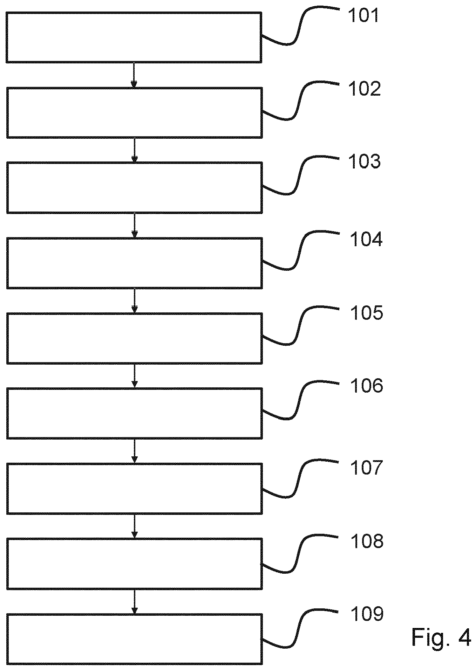

Fig. 4 stellt ein Blockdiagramm dar. Das Blockdiagramm beschreibt schematisch die Verfahrensschritte zum Lagern eines Sportruderboots 11 in einer Anordnung 1 zur Lagerung von einem oder mehreren Sportruderbooten 11 mit mehreren Lagerungsvorrichtungen 15. Auch wenn das Blockdiagramm nur die Verfahrensschritte für das Hineinbringen eines Sportruderboots 11 in eine Lagerungsvorrichtungen 15 beschreibt, so ist klar, dass eine logische Umkehrung der Verfahrensschritte des Blockdiagramms die Verfahrensschritte für das Herausnehmen eines Sportruderboots 11 beschreibt. Für das Hineinbringen mehrerer Sportruderboote 11 in die Anordnung können die Verfahrensschritte (für unterschiedliche Lagerungsvorrichtungen 15 mit Führungsschienen auf unterschiedlichen horizontalen Ebenen) mehrfach ausgeführt werden.

In Schritt 101 ist zunächst eine erste und eine zweite Führungsschiene 4 bereitzustellen, die voneinander beabstandet sind und die in einer horizontalen Ebene parallel zueinander angeordnet sind. Die Führungsschienen 4 können an einer Rahmenstruktur 3 angeordnet und bevorzugt daran befestigt werden (formschlüssig und / oder stoffschlüssig). Außerdem ist ein erster Schlitten 16a, der eine erste Auflageeinrichtung (für ein Sportruderboot 11) bildet, bereitzustellen (Schritt 102). Der erste Schlitten 16a weist Rollen 7 auf und ist rollend auf der ersten und zweiten Führungsschiene 4 gelagert, derart, dass der erste Schlitten 16a auf der ersten und zweiten Führungsschiene 4 vor und zurück bewegbar ist. Der erste Schlitten 16a weist äußere Abschnitte 14 auf, welche der ersten und der zweiten Führungsschiene 4 zugeordnet sind und über einen Steg 13a, 13b (des ersten Schlittens 16a) miteinander verbunden sind. Der erste Schlitten 16a kann ein hinterer Schlitten sein. Ferner kann der erste Schlitten 16a ein nicht herausnehmbarer Schlitten sein. Alternativ kann der erste Schlitten 16a einen konvexen Steg 13b aufweisen. In einem weiteren Schritt 103 ist der erste Schlitten 16a in einer ersten Position anzuordnen, bei der der erste Schlitten 16a in einem vorderen Bereich der ersten und zweiten Führungsschiene 4 angeordnet ist. Der erste Schlitten 16a kann auf den Führungsschienen 4 angeordnet werden, bevor ein weiterer (z. B. ein zweiter) Schlitten darauf angeordnet wird. In einer speziellen Ausgestaltungsvariante kann vorgesehen sein, dass vor der Positionierung des ersten Schlittens 16a der zweite Schlitten 16b von den Führungsschienen 4 heruntergenommen wird. In einem weiteren Schritt 104 ist das (zu lagernde) Sportruderboot 11 bereitzustellen. Das Sportruderboot 11 kann zuvor aus der Lagerungsvorrichtung 15, z. B. zum Rudern mit dem Boot, herausgenommen worden sein. Alternativ kann vorgesehen sein, dass das Sportruderboot 11 erstmalig in die Lagervorrichtung 15 gebracht werden soll. In einem nächsten Schritt 105 wird ein erster Abschnitt des Sportruderboots 11 auf den Steg 13a, 13b des ersten Schlittens 16a aufgelegt. Bevorzugt wird dies von Personen, insbesondere Ruderern, bewerkstelligt. Das Heben und Auflegen des Sportruderboots 11 auf den Steg 13a, 13b des ersten Schlittens 16a erfolgt durch die Personen manuell, d. h. händisch. Nachdem der erste Abschnitt des Sportruderboots 11 auf den Steg 13a, 13b des ersten Schlittens 16a aufgelegt ist, muss dieser nicht mehr von den Personen gehalten werden. Der erste Abschnitt des Sportruderboots 11 kann in einem mittleren Bereich des Sportruderboots 11 angeordnet sein. Der erste Abschnitt des Sportruderboots 11 kann insbesondere die oberste Kante der Bordwand des Sportruderboots 11 umfassen. Alternativ kann der erste Abschnitt des Sportruderboots 11 einen der Luftkästen des Sportruderboots 11 umfassen. In Schritt 105 kann ein erster Abschnitt der obersten Kante der Bordwand des Sportruderboots 11 auf den Steg 13a, 13b des ersten Schlittens 16a aufgelegt werden. In Reaktion auf Schritt 105 kann in einem folgenden Schritt 106 das Sportruderboot 11 verschoben werden, derart, dass das Sportruderboot 11 in seiner Längsrichtung mittels des ersten Schlittens 16a entlang der ersten und zweiten Führungsschiene 4 in eine zweite Position bewegt wird, bei der der erste Schlitten 16a in einem hinteren Bereich der ersten und zweiten Führungsschiene 4 angeordnet ist. Während dieses Vorgangs kann ein hinterer Teil des Sportruderboots 11 weiterhin von Personen gehalten werden. Bevorzugt führen diese Personen den Schritt 106 aus. Alternativ können erste Personen das Sportruderboot 11 halten, während zweite Personen oder eine Maschine das Verschieben vornimmt. In einem Schritt 107 wird eine zweite Auflageeinrichtung, insbesondere ein zweiter Schlitten 16b oder alternativ ein Träger (nicht dargestellt), bereitgestellt. Der zweite Schlitten 16b kann mittels Rollen 7 auf der ersten und der zweiten Führungsschiene 4 rollend gelagert sein. Der zweite Schlitten 16b ist auf der ersten und zweiten Führungsschiene 4 unabhängig vom ersten Schlitten 16a vor und zurück bewegbar. Der Zweite Schlitten 16b kann äußere Abschnitte 14 aufweisen, welche der ersten und zweiten Führungsschiene 4 zugeordnet sind und über einen Steg 13a, 13b des zweiten Schlittens 16b miteinander verbunden sind. Der zweite Schlitten 16b kann ein vorderer Schlitten sein. Ferner kann der zweite Schlitten 16b ein herausnehmbarer Schlitten sein. Der zweite Schlitten 16b kann einen kovexen Steg 13b aufweisen. Der zweite Schlitten 16b kann einen geraden Steg 13a aufweisen. Ist der zweite Schlitten 16b zum Zeitpunkt dieses Schrittes nicht auf den Führungsschienen 4 angeordnet, so ist der zweite Schlitten 16b auf die Führungsschienen 4 zu heben. Zumindest in Reaktion auf den Schritt 107 ist die zweite Auflageeinrichtung in einem vorderen Bereich der ersten und der zweiten Führungsschiene anzuordnen, d. h. der zweite Schlitten 16b ist auf den Führungsschienen 4 anzuordnen oder alternativ ist der Träger zu fixieren (Schritt 108). Der zweite Schlitten 16b kann sich dabei in einem vorderen Bereich der Führungsschienen 4 befinden. Bevorzugt ist die zweite Auflageeinrichtung, insbesondere der zweite Schlitten 16b, nach diesem Schritt so angeordnet, dass sich die zweite Auflageeinrichtung, insbesondere der Steg 13a, 13b des zweiten Schlittens 16b, genau unter einem zweiten Abschnitt des Sportruderboots 11 befindet. Der Schritt 107 und oder 108 kann z. B. von einer Person, die nicht den hinteren Teil des Boots hält, oder einer Maschine ausgeführt werden. In Reaktion auf das Anordnen bzw. Fixieren der zweiten Auflageeinrichtung, des zweiten Schlittens 16b oder des Trägers, wird ein zweiter Abschnitt des Sportruderboots 11 auf die zweite Auflageeinrichtung (z. B. den Steg 13a, 13b des zweiten Schlittens 16b oder den Träger) aufgelegt (Schritt 109). Ist der zweite Schlitten 16b bereits genau unter dem zweiten Abschnitt des Sportruderboots 11 positioniert worden, so kann das Boot in Schritt 109 über eine Vertikalbewegung einfach auf den Steg 13a, 13b des zweiten Schlittens 16b oder den Träger abgelegt werden. Schritt 109 kann von den Personen / der Person ausgeführt werden, welche den hinteren Teil des Boots tragen / trägt.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Lagerungsvorrichtung (15) zum Lagern eines Sportruderboots (11), aufweisend:
- eine erste und eine zweite Führungsschiene (4), die voneinander beabstandet und in einer horizontalen Ebene parallel zueinander angeordnet sind;
- eine erste Auflageeinrichtung, die zur lagernden Aufnahme eines ersten Bootabschnitts eines Sportruderboots (11) mit einem ersten Schlitten (16, 16a) gebildet ist, wobei der erste Schlitten (16, 16a)
- mittels Rollen (7) auf der ersten und der zweiten Führungsschiene (4) rollend gelagert ist, derart, dass der erste Schlitten (16, 16a) ohne und mit hierauf lagerndem Sportruderboot (11) entlang der ersten und der zweiten Führungsschiene (4) verlagerbar ist; und
- äußere Abschnitte (14) aufweist, die der ersten und der zweiten Führungsschiene (4) zugeordnet sind und über einen Steg (13a, 13b), auf welchem der erste Bootabschnitt nach dem Auflegen lagert, miteinander verbunden sind; und
- eine zweite Auflageeinrichtung, die zur lagernden Aufnahme eines zweiten Bootabschnitts des Sportruderboots (11), welcher von dem ersten Bootabschnitt verschieden ist, einer der folgenden Ausführungen entsprechend ausgeführt ist:
- ein zweiter Schlitten (16, 16b), der unabhängig von dem ersten Schlitten (16, 16a) entlang der ersten und der zweiten Führungsschiene (4) verlagerbar ist; und
- ein Träger, der in Bezug auf die erste und die zweite Führungsschiene (4) ortsfest angeordnet ist und einen konvexen Auflageabschnitt aufweist.

2. Lagerungsvorrichtung (15) nach Anspruch 1, **dadurch gekennzeichnet, dass** der zweite Schlitten (16, 16b)
- mittels Rollen (7) auf der ersten und der zweiten Führungsschiene (4) rollend gelagert ist, derart, dass der zweite Schlitten (16, 16b) ohne und mit hierauf lagerndem Sportruderboot entlang der ersten und der zweiten Führungsschiene (4) verlagerbar ist; und
- äußere Abschnitte (14) aufweist, die der ersten und der zweiten Führungsschiene (4) zugeordnet sind und über einen Steg (13a, 13b), auf welchem der zweite Bootabschnitt nach dem Auflegen lagert, miteinander verbunden sind.

3. Lagerungsvorrichtung (15) nach Anspruch 1 oder 2, **dadurch gekennzeichnet, dass** der Steg (13b) von zumindest einem Schlitten (16, 16a, 16b) konvex ist und / oder zumindest ein Schlitten (16, 16a, 16b) von den Führungsschienen abnehmbar ist.

4. Lagerungsvorrichtung (15) nach einem der vorangegangenen Ansprüche, **dadurch gekennzeichnet, dass** der Steg (13b) von zumindest einem Schlitten (16, 16a, 16b) einen mittleren Bereich (23) und äußere Bereichen (21, 22) aufweist, wobei der mittlere Bereich (23) höher angeordnet ist als die äußeren Bereiche (21, 22).

5. Lagerungsvorrichtung (15) nach einem der vorangegangenen Ansprüche, **dadurch gekennzeichnet, dass** zumindest ein Schlitten (16, 16a, 16b) vier Rollen (7) aufweist, wobei zwei der vier Rollen (7) die erste Führungsschiene (4) kontaktieren und zwei weitere der vier Rollen (7) die zweite Führungsschiene (4) kontaktieren.

6. Lagerungsvorrichtung (15) nach einem der vorangegangenen Ansprüche, **dadurch gekennzeichnet, dass** zumindest eine Rolle der Rollen (7) von zumindest einem Schlitten (16, 16a, 16b) derart mit der ersten oder der zweiten Führungsschiene (4) in Verbindung steht, dass die Rolle (7) in der horizontalen Ebene im Bereich der ersten oder der zweiten Führungsschiene (4) ausschließlich entlang der ersten oder der zweiten Führungsschiene (4) vor und zurück bewegbar ist.

7. Lagerungsvorrichtung (15) nach einem der vorangegangenen Ansprüche, **dadurch gekennzeichnet, dass** die Länge der ersten und der zweiten Führungsschiene (4) in einem Bereich zwischen 6 m und 20 m liegt und / oder der Abstand der ersten und der zweiten Führungsschiene (4) in einem Bereich von 1,5 m bis 3 m liegt.

8. Anordnung (1) mit mehreren Lagerungsvorrichtungen (15) nach einem der vorangegangenen Ansprüche, wobei die mehreren Lagerungsvorrichtungen (15) übereinander angeordnet sind.

9. Anordnung (1) nach Anspruch 8, **dadurch gekennzeichnet, dass** die Dimension der Anordnung (1) in Längsrichtung parallel zu der ersten oder der zweiten Führungsschiene (4) um ein Vielfaches größer ist als die Dimension der Anordnung (1) in einer Richtung senkrecht zu der ersten oder der zweiten Führungsschiene.

10. Anordnung (1) nach Anspruch 8 oder 9, **dadurch gekennzeichnet, dass** die Anordnung (1) mehrere Sportruderboote (11) umfasst, wobei
- ein erstes der mehreren Sportruderboote (11) von einer ersten der mehreren Lagerungsvorrichtungen (15) lagernd aufgenommen ist;
- ein zweites der mehreren Sportruderboote (11) von einer zweiten der mehreren Lagerungsvorrichtungen (15) lagernd aufgenommen ist, wobei das erste der mehreren Sportruderboote (11) von dem zweiten der mehreren Sportruderboote (11) und das erste der mehreren Lagerungsvorrichtungen (15) von dem zweiten der mehreren Lagerungsvorrichtungen (15) verschieden ist.

11. Anordnung (1) nach einem der Ansprüche 8 bis 10, **dadurch gekennzeichnet, dass** zumindest ein Sportruderboot (11) derart von zumindest einer der mehreren Lagerungsvorrichtungen (15) lagernd aufgenommen ist, dass auf dem Steg (13a, 13b) des ersten Schlittens (16, 16a) der ersten Auflageeinrichtung der einen der mehreren Lagerungsvorrichtungen (15) ein erster Abschnitt des Sportruderboots (11) aufliegt und auf der zweiten Auflageeinrichtung der einen der mehreren Lagerungsvorrichtungen (15) ein zweiter Abschnitt des Sportruderboots (11) aufliegt.

12. Anordnung (1) nach Anspruch 11, **dadurch gekennzeichnet, dass** die oberste Kante der Bordwand (10) des Sportruderboots (11) in einem mittleren Bereich des Sportruderboots (11) den ersten und den zweiten Abschnitt des Sportruderboots (11) bildet.

13. Anordnung (1) nach einem der Ansprüche 8 bis 12, **dadurch gekennzeichnet, dass** die mehreren Lagerungsvorrichtungen (15) von einer Rahmenstruktur (3) aufgenommen sind.

14. Anordnung (1) nach Anspruch 13, **dadurch gekennzeichnet, dass**
- die Rahmenstruktur (3) auf Rädern steht; oder
- die Rahmenstruktur (3) fest mit dem Boden verbunden ist.

15. Anordnung (1) nach Anspruch 13 oder 14, **dadurch gekennzeichnet, dass** die Rahmenstruktur (3) verkleidet ist, derart, dass die in der Rahmenstruktur (3) gelagerten Sportruderboote (11) vor äußeren Einflüssen geschützt sind.

16. Verfahren zum Lagern eines Sportruderboots (11), bei dem Folgendes vorgesehen ist:
- Bereitstellen einer ersten und einer zweiten Führungsschiene (4), die voneinander beabstandet und in einer horizontalen Ebene parallel zueinander angeordnet sind;
- Bereitstellen einer ersten Auflageeinrichtung, die zur lagernden Aufnahme eines ersten Bootabschnitts eines Sportruderboots mit einem ersten Schlitten (16, 16a) gebildet ist, wobei der erste Schlitten (16, 16a) mittels Rollen (7) auf der ersten und der zweiten Führungsschiene (4) rollend gelagert ist, derart, dass der erste Schlitten (16, 16a) ohne und mit hierauf lagerndem Sportruderboot entlang der ersten und der zweiten Führungsschiene (4) verlagerbar ist, und äußere Abschnitte (14) aufweist, die der ersten und der zweiten Führungsschiene (4) zugeordnet sind und über einen Steg (13a, 13b), auf welchem der erste Bootabschnitt nach dem Auflegen lagert, miteinander verbunden sind;
- Anordnen des ersten Schlittens in einer ersten Position, bei der der erste Schlitten (16, 16a) in einem vorderen Bereich der ersten und der zweiten Führungsschiene (4) angeordnet ist;
- Bereitstellen eines Sportruderboots (11);
- Auflegen eines ersten Abschnitts des Sportruderboots (11) auf den Steg (13a, 13b) des ersten Schlittens (16, 16a);
- in Reaktion auf das Auflegen, Verschieben des Sportruderboots (11), derart, dass das Sportruderboot (11) in seiner Längsrichtung mittels des ersten Schlittens (16, 16a) entlang der ersten und der zweiten Führungsschiene (4) in eine zweite Position bewegt wird, bei der der erste Schlitten (16, 16a) in einem hinteren Bereich der ersten und der zweiten Führungsschiene (4) angeordnet ist;
- Bereitstellen einer zweiten Auflageeinrichtung, die zur lagernden Aufnahme eines zweiten Bootabschnitts des Sportruderboots (11), welcher von dem ersten Bootabschnitt verschieden ist, einer der folgenden Ausführungen entsprechend ausgeführt ist:
- ein zweiter Schlitten (16, 16b), der unabhängig von dem ersten Schlitten (16, 16a) entlang der ersten und der zweiten Führungsschiene (4) vor und zurück bewegbar ist; und
- ein Träger, der in Bezug auf die erste und die zweite Führungsschiene (4) ortsfest angeordnet ist und einen konvexen Auflageabschnitt aufweist;
- in Reaktion auf das Verschieben des Sportruderboots (11), Anordnen der zweiten Auflageeinrichtung in einem vorderen Bereich der ersten und der zweiten Führungsschiene (4);
- in Reaktion hierauf wird ein zweiter Abschnitt des Sportruderboots (11) auf die zweite Auflageeinrichtung aufgelegt.

## Claims

1. A storage device (15) for storing a sport rowing boat (11), comprising:
- a first and a second guide rail (4), which are arranged spaced apart from each other and parallel to each other in a horizontal plane;
- a first support device, which is formed with a first carriage (16, 16a) for supportingly receiving a first boat section of a sport rowing boat (11), wherein the first carriage (16, 16a)
- is rollingly supported on the first and the second guide rail (4) by means of rollers (7) such that the first carriage (16, 16a) is displaceable along the first and the second guide rail (4) without and with a sport rowing boat (11) supported thereon; and
- has outer sections (14), which are assigned to the first and the second guide rail (4) and are connected to one another via a web (13a, 13b), on which the first boat section is supported after loading; and
- a second support device, which is configured for supportingly receiving a second boat section of the sport rowing boat (11), which is different from the first boat section, in accordance with one of the following embodiments:
- a second carriage (16, 16b), which is displaceable along the first and the second guide rail (4) independently of the first carriage (16, 16a); and
- a support, which is arranged stationary with respect to the first and the second guide rail (4) and has a convex support section.

2. Storage device (15) according to claim 1, **characterised in that** the second carriage (16, 16b)
- is rollingly supported on the first and the second guide rail (4) by means of rollers (7) such that the second carriage (16, 16b) is displaceable along the first and the second guide rail (4) without and with a sport rowing boat supported thereon; and
- has outer sections (14), which are assigned to the first and the second guide rail (4) and are connected to one another via a web (13a, 13b), on which the second boat section is supported after loading.

3. Storage device (15) according to claim 1 or 2, **characterised in that** the web (13b) of at least one carriage (16, 16a, 16b) is convex and/or at least one carriage (16, 16a, 16b) is removable from the guide rails.

4. Storage device (15) according to one of the preceding claims, **characterised in that** the web (13b) of at least one carriage (16, 16a, 16b) has a central region (23) and outer regions (21, 22), wherein the central region (23) is arranged higher than the outer regions (21, 22).

5. Storage device (15) according to one of the preceding claims, **characterised in that** at least one carriage (16, 16a, 16b) has four rollers (7), wherein two of the four rollers (7) contact the first guide rail (4) and two further of the four rollers (7) contact the second guide rail (4).

6. Storage device (15) according to one of the preceding claims, **characterised in that** at least one roller of the rollers (7) of at least one carriage (16, 16a, 16b) is connected to the first or the second guide rail (4) such that the roller (7) is movable back and forth in the horizontal plane in the region of the first or the second guide rail (4) exclusively along the first or the second guide rail (4).

7. Storage device (15) according to one of the preceding claims, **characterised in that** the length of the first and the second guide rail (4) lies in a range between 6 m and 20 m and/or the distance between the first and the second guide rail (4) lies in a range from 1.5 m to 3 m.

8. Arrangement (1) having a plurality of storage devices (15) according to one of the preceding claims, wherein the plurality of storage devices (15) are arranged one above the other.

9. Arrangement (1) according to claim 8, **characterised in that** the dimension of the arrangement (1) in the longitudinal direction parallel to the first or the second guide rail (4) is many times larger than the dimension of the arrangement (1) in a direction perpendicular to the first or the second guide rail.

10. Arrangement (1) according to claim 8 or 9, **characterised in that** the arrangement (1) comprises a plurality of sport rowing boats (11), wherein
- a first of the plurality of sport rowing boats (11) is stored by a first of the plurality of storage devices (15);
- a second of the plurality of sport rowing boats (11) is stored by a second of the plurality of storage devices (15), wherein the first of the plurality of sport rowing boats (11) is different from the second of the plurality of sport rowing boats (11) and the first of the plurality of storage devices (15) is different from the second of the plurality of storage devices (15).

11. Arrangement (1) according to one of claims 8 to 10, **characterised in that** at least one sport rowing boat (11) is stored by at least one of the plurality of storage devices (15) such that a first section of the sport rowing boat (11) rests on the web (13a, 13b) of the first carriage (16, 16a) of the first support device of the one of the plurality of storage devices (15) and a second section of the sport rowing boat (11) rests on the second support device of the one of the plurality of storage devices (15).

12. Arrangement (1) according to claim 11, **characterised in that** the uppermost edge of the board wall (10) of the sport rowing boat (11) forms the first and the second section of the sport rowing boat (11) in a central region of the sport rowing boat (11).

13. Arrangement (1) according to one of claims 8 to 12, **characterised in that** the plurality of storage devices (15) are received by a frame structure (3).

14. Arrangement (1) according to claim 13, **characterised in that**
- the frame structure (3) stands on wheels; or
- the frame structure (3) is firmly connected to the ground.

15. Arrangement (1) according to claim 13 or 14, **characterised in that** the frame structure (3) is covered such that the sport rowing boats (11) stored in the frame structure (3) are protected from external influences.

16. Method for storing a sport rowing boat (11), comprising:
- providing a first and a second guide rail (4), which are arranged spaced apart from each other and parallel to each other in a horizontal plane;
- providing a first support device, which is formed with a first carriage (16, 16a) for supportingly receiving a first boat section of a sport rowing boat, wherein the first carriage (16, 16a) is rollingly supported on the first and the second guide rail (4) by means of rollers (7) such that the first carriage (16, 16a) is displaceable along the first and the second guide rail (4) without and with a sport rowing boat supported thereon, and has outer sections (14), which are assigned to the first and the second guide rail (4) and are connected to one another via a web (13a, 13b), on which the first boat section is supported after loading;
- arranging the first carriage in a first position, in which the first carriage (16, 16a) is arranged in a front region of the first and the second guide rail (4);
- providing a sport rowing boat (11);
- loading a first section of the sport rowing boat (11) onto the web (13a, 13b) of the first carriage (16, 16a);
- in response to the loading, displacing the sport rowing boat (11) such that the sport rowing boat (11) is moved in its longitudinal direction along the first and the second guide rail (4) by means of the first carriage (16, 16a) into a second position, in which the first carriage (16, 16a) is arranged in a rear region of the first and the second guide rail (4);
- providing a second support device, which is configured for supportingly receiving a second boat section of the sport rowing boat (11), which is different from the first boat section, in accordance with one of the following embodiments:
- a second carriage (16, 16b), which is movable back and forth along the first and the second guide rail (4) independently of the first carriage (16, 16a); and
- a support, which is arranged stationary with respect to the first and the second guide rail (4) and has a convex support section;
- in response to the displacement of the sport rowing boat (11), arranging the second support device in a front region of the first and the second guide rail (4);
- in response thereto, a second section of the sport rowing boat (11) is placed on the second support device.

## Revendications

1. Dispositif de stockage (15) conçu pour le stockage d'un bateau d'aviron de sport (11), comportant :
- un premier rail et un deuxième rail de guidage (4) installés à une certaine distance l'un de l'autre, et qui sont disposés sur un plan horizontal, parallèlement l'un par rapport à l'autre ;
- un premier dispositif d'appui qui est formé pour recevoir de manière à la supporter une première section du bateau d'un bateau d'aviron de sport (11) avec un premier chariot (16, 16a), dans lequel le premier chariot (16, 16a)
- est logé de manière roulante par le biais de galets (7) sur le premier rail et le deuxième rail de guidage (4), de telle sorte que le premier chariot (16, 16a) peut être déplacé, sans et avec le bateau d'aviron de sport (11) qui est logé dessus, le long du premier rail et du deuxième rail de guidage (4) ; et
qu'il comporte des sections extérieures (14) qui sont affectées au premier rail et au deuxième rail de guidage (4) et qui sont reliées ensemble par l'intermédiaire d'une entretoise (13a, 13b) sur laquelle la première section du bateau est logée après la pose ; et
- un deuxième dispositif d'appui qui, pour recevoir de manière supportée une deuxième section du bateau du bateau d'aviron de sport (11), qui est différente de la première section du bateau, est réalisé selon un des modes de réalisation suivants :
- un deuxième chariot (16, 16b) qui peut être déplacé indépendamment du premier chariot (16, 16a) le long du premier rail et du deuxième rail de guidage (4) ; et
- un support qui est agencé de façon fixe par rapport au premier rail et au deuxième rail de guidage (4) et qui comporte une section d'appui convexe.

2. Dispositif de stockage (15) selon la revendication 1, **caractérisé en ce que** le deuxième chariot (16, 16b)
- est logé de manière roulante par le biais de galets (7) sur le premier rail et le deuxième rail de guidage (4), de telle sorte que le deuxième chariot (16, 16b) peut être déplacé, sans et avec le bateau d'aviron de sport qui est logé dessus, le long du premier rail et du deuxième rail de guidage (4) ; et
- qu'il comporte des sections extérieures (14) qui sont affectées au premier rail et au deuxième rail de guidage (4) et qui sont reliées ensemble par l'intermédiaire d'une entretoise (13a, 13b) sur laquelle la deuxième section du bateau est logée après la pose.

3. Dispositif de stockage (15) selon la revendication 1 ou 2, **caractérisé en ce que** l'entretoise (13b) d'au moins un chariot (16, 16a, 16b) est convexe et/ou au moins un chariot (16, 16a, 16b) peut être retiré des rails de guidage.

4. Dispositif de stockage (15) selon l'une des revendications qui précèdent, **caractérisé en ce que** l'entretoise (13b) d'au moins un chariot (16, 16a, 16b) comporte une zone centrale (23) et des zones extérieures (21, 22), de telle sorte que la zone centrale (23) est installée plus haut que les zones extérieures (21, 22).

5. Dispositif de stockage (15) selon l'une des revendications qui précèdent, **caractérisé en ce que** au moins un chariot (16, 16a, 16b) comporte quatre galets (7), de telle sorte que deux des quatre galets (7) sont en contact avec le premier rail de guidage (4) et que les deux autres des quatre galets (7) sont en contact avec le deuxième rail de guidage (4).

6. Dispositif de stockage (15) selon l'une des revendications qui précèdent, **caractérisé en ce qu'**au moins un seul des galets (7) est en contact par au moins un chariot (16, 16a, 16b) avec le premier rail ou le deuxième rail de guidage (4) de telle sorte que le galet (7) peut être déplacé vers l'avant et vers l'arrière exclusivement le long du premier rail ou du deuxième rail de guidage (4), sur le plan horizontal, dans la zone du premier rail ou du deuxième rail de guidage (4).

7. Dispositif de stockage (15) selon l'une des revendications qui précèdent, **caractérisé en ce que** la longueur du premier rail et du deuxième rail de guidage (4) se situe sur une plage comprise entre 6 m et 20 m, et/ou la distance du premier rail et du deuxième rail de guidage (4) se situe sur une plage de 1,5 m à 3 m.

8. Dispositif (1) comportant plusieurs dispositifs de stockage (15) selon l'une des revendications qui précèdent, sur lequel ces plusieurs dispositifs de stockage (15) sont disposés l'un au-dessus de l'autre.

9. Dispositif (1) selon la revendication 8, **caractérisé en ce que** la dimension du dispositif (1) est de multiples fois plus grande dans le sens de la longueur parallèlement au premier rail ou au deuxième rail de guidage (4) que la dimension du dispositif (1) dans une direction verticale au premier rail ou au deuxième rail de guidage.

10. Dispositif (1) selon la revendication 8 ou 9, **caractérisé en ce que** le dispositif comporte plusieurs bateaux d'aviron de sport (11), de sorte :
- qu'un premier de la pluralité des bateaux d'aviron de sport (11) d'un premier de la pluralité des dispositifs de stockage (15) y est logé ;
- un deuxième de la pluralité des bateaux d'aviron de sport (11) est logé dans un deuxième de la pluralité des dispositifs de stockage (15), de telle façon que le premier de la pluralité des bateaux d'aviron de sport (11) est séparé du deuxième de la pluralité des bateaux d'aviron de sport (11) et le premier de la pluralité des dispositifs de stockage (15) est séparé du deuxième de la pluralité des dispositifs de stockage (15).

11. Dispositif (1) selon l'une des revendications 8 à 10, **caractérisé en ce que** au moins un bateau d'aviron de sport (11) est logé de telle sorte sur au moins un de la pluralité des dispositifs de stockage (15) qu'une première section du bateau d'aviron de sport (11) repose sur l'entretoise (13a, 13b) du premier chariot (16, 16a) du premier dispositif d'appui de l'un de la pluralité des dispositifs de stockage (15), et qu'une deuxième section du bateau d'aviron de sport (11) repose sur le deuxième dispositif d'appui de l'un de la pluralité des dispositifs de stockage (15).

12. Dispositif (1) selon la revendication 11, **caractérisé en ce que** le bord supérieur de la paroi latérale (10) du bateau d'aviron de sport (11) forme, dans une zone centrale du bateau d'aviron de sport (11), la première section et la deuxième section du bateau d'aviron de sport (11).

13. Dispositif (1) selon l'une des revendications 8 à 12, **caractérisé en ce que** les plusieurs dispositifs de stockage (15) sont soutenus par une structure de cadre (3).

14. Dispositif (1) selon la revendication 13, **caractérisé en ce que**
- la structure de cadre (3) est posée sur des roues ; ou
- la structure de cadre (3) est solidement reliée au sol.

15. Dispositif (1) selon la revendication 13 ou 14, **caractérisé en ce que** la structure de cadre (3) est recouverte d'un revêtement, de telle sorte que les bateaux d'aviron de sport (11) qui sont logés dans la structure de cadre (3) sont protégés contre les influences extérieures.

16. Procédé conçu pour l'entreposage d'un bateau d'aviron de sport (11) dans lequel les dispositions ci-après sont prévues :
- mise à disposition d'un premier rail et d'un deuxième rail de guidage (4) qui sont placés à une certaine distance l'un de l'autre et sur un plan horizontal, parallèlement l'un par rapport à l'autre ;
- mise à disposition d'un premier dispositif d'appui qui est formé pour recevoir de manière à la supporter une première section du bateau d'un bateau d'aviron de sport (11) avec un premier chariot (16, 16a), dans lequel le premier chariot (16, 16a) est installé de manière roulante par le biais de galets (7) sur le premier rail et le deuxième rail de guidage (4), de telle sorte que le premier chariot (16, 16a) peut être déplacé, sans et avec le bateau d'aviron de sport qui est logé dessus, le long du premier rail et du deuxième rail de guidage (4), et comporte des sections extérieures (14) qui sont affectées au premier rail et au deuxième rail de guidage (4) et qui sont reliées ensemble par l'intermédiaire d'une entretoise (13a, 13b) sur laquelle la première section du bateau est logée après la pose ;
- agencement du premier chariot sur une première position dans laquelle le premier chariot (16, 16a) est installé dans une zone avant du premier rail et du deuxième rail de guidage (4);
- mise à disposition d'un bateau d'aviron de sport (11) ;
- pose d'une première section du bateau d'aviron de sport (11) sur l'entretoise (13a, 13b) du premier chariot (16, 16a) ;
- en réaction à la pose, déplacement du bateau d'aviron de sport (11) de telle sorte que ce bateau d'aviron de sport (11) est déplacé dans le sens de sa longueur par le biais du premier chariot (16, 16a) le long du premier rail et du deuxième rail de guidage (4) vers une deuxième position sur laquelle le premier chariot (16, 16a) est installé dans une zone arrière du premier rail et du deuxième rail de guidage (4) ;
- mise à disposition d'un deuxième dispositif d'appui qui, pour recevoir de manière supportée une deuxième section du bateau du bateau d'aviron de sport (11), qui est différente de la première section du bateau, est réalisé selon un des modes de réalisation suivants :
- un deuxième chariot (16, 16b) qui peut être déplacé vers l'avant et vers l'arrière, indépendamment du premier chariot (16, 16a) le long du premier rail et du deuxième rail de guidage (4) ; et
- un support qui est agencé de façon fixe par rapport au premier rail et au deuxième rail de guidage (4) et qui comporte une section d'appui convexe (4) ;
- en réaction au déplacement du bateau d'aviron de sport (11), installation du deuxième dispositif d'appui dans une zone avant du premier rail et du deuxième rail de guidage (4) ;
- en réaction à cela, une deuxième section du bateau d'aviron de sport (11) est déposée sur le dispositif d'appui.
